# EUROPEAN PATENT APPLICATION

(11) **EP 4 316 966 A1**
(43) Date of publication of application: **07.02.2024**
(21) Application number: 21935036.0
(22) Date of filing: 02.04.2021
(51) Int. Cl.: B62K 25/08, B62K 5/007, B62K 5/08

(54) **VEHICLE**

(71) Applicant: Yamaha Hatsudoki Kabushiki Kaisha, Iwata-shi, Shizuoka 438-8501 (JP)
(72) Inventor: NAGASAWA, Kenta, Kakegawa-shi, Shizuoka 436-0084 (JP); KAWAMURA, Masayuki, Kakegawa-shi, Shizuoka 436-0084 (JP); YOSHIHARA, Masanori, Iwata-shi, Shizuoka 438-8501 (JP)
(74) Representative: Grünecker Patent- und Rechtsanwälte PartG mbB
(86) International application number: PCT/JP2021/014361
(87) International publication number: WO 2022/208875

(57) **Abstract**

A vehicle **1** according to an embodiment includes: at least three wheels including a steered wheel **4L, 4R;** at least one drive source **60L, 60R** that drives at least two of the wheels; and a front suspension **40** having an upper arm **41L, 41R** and a lower arm **42L, 42R** supporting the steered wheel **4L, 4R.** In a state where the vehicle **1** is stationary on a level road surface **15,** an anhedral angle of the lower arm **42L, 42R** is larger than an anhedral angle of the upper arm **41L, 41R;** and a difference between the anhedral angle of the lower arm **42L, 42R** and the anhedral angle of the upper arm **41L, 41R** is 5 degrees or more.

## Description

### TECHNICAL FIELD

The present invention relates to a vehicle.

### BACKGROUND ART

A handle-type electric wheelchair has been known as one of the vehicles that run with a human on board (e.g., Patent Document No. 1). A handle-type electric wheelchair is sometimes referred to as an electric cart.

Generally, handle-type electric wheelchairs are used for traveling on relatively flat paved roads. For example, the user can ride a handle-type electric wheelchair between home and a store to do shopping.

### CITATION LIST

### PATENT LITERATURE

Patent Document No. 1: Japanese Laid-Open Patent Publication No. 2000-247155

### SUMMARY OF INVENTION

### TECHNICAL PROBLEM

There is a need to further improve the driving performance of such vehicles.

### SOLUTION TO PROBLEM

A vehicle according to an embodiment of the present invention is a vehicle including: at least three wheels including a steered wheel; at least one drive source that drives at least two of the wheels; and a suspension having an upper arm and a lower arm supporting the steered wheel, wherein: in a state where the vehicle is stationary on a level road surface, an anhedral angle of the lower arm is larger than an anhedral angle of the upper arm; and a difference between the anhedral angle of the lower arm and the anhedral angle of the upper arm is 5 degrees or more.

As the anhedral angle of the lower arm is larger than the anhedral angle of the upper arm, with the anhedral angle difference being 5 degrees or more, it is possible to reduce the amount of change in the angle between the longitudinal direction of each of the upper arm and the lower arm and the tire center line when the suspension moves in a stroke. This increases the clearance between the suspension and the steered wheel, and it is possible to both increase the wheel stroke and increase the steering angle of the steered wheel.

In one embodiment, the difference between the anhedral angle of the lower arm and the anhedral angle of the upper arm may be 5 degrees or more and 9 degrees or less.

As the difference between the anhedral angle of the lower arm and the anhedral angle of the upper arm is large, it is possible to reduce the amount of change in the angle between the longitudinal direction of each of the upper arm and the lower arm and the tire center line when the suspension moves in a stroke.

In one embodiment, the amount of change in a camber angle of the steered wheel relative to the wheel stroke of the suspension may be 5 degrees or more.

As the camber angle of the steered wheel significantly changes in response to the stroke of the suspension, it is possible to reduce the amount of change in the angle between the longitudinal direction of each of the upper arm and the lower arm and the tire center line.

In one embodiment, the amount of change in the camber angle of the steered wheel relative to the wheel stroke of the suspension may be 5 degrees or more and 10 degrees or less.

As the camber angle of the steered wheel significantly changes in response to the stroke of the suspension, it is possible to reduce the amount of change in the angle between the longitudinal direction of each of the upper arm and the lower arm and the tire center line.

In one embodiment, when the suspension moves in a bound stroke, the camber angle of the steered wheel may be a negative camber; and when the suspension moves in a rebound stroke, the camber angle of the steered wheel may be a positive camber.

As the camber angle changes between a negative camber and a positive camber in response to the stroke of the suspension, it is possible to reduce the amount of change in the angle between the longitudinal direction of each of the upper arm and the lower arm and the tire center line.

In one embodiment, in a state where the vehicle is stationary on the level road surface, the anhedral angle of the upper arm may be 15 degrees or more, and the anhedral angle of the lower arm may be 20 degrees or more.

As the anhedral angle of the upper arm and the anhedral angle of the lower arm are as large as 15 degrees or more and 20 degrees or more, respectively, it is possible to increase the roll rigidity.

In one embodiment, in a state where the vehicle is stationary on the level road surface, the anhedral angle of the upper arm may be 15 degrees or more and 20 degrees or less, and the anhedral angle of the lower arm may be 20 degrees or more and 25 degrees or less.

As the anhedral angle of the upper arm and the anhedral angle of the lower arm are large, it is possible to increase the roll rigidity.

In one embodiment, a swing angle of each of the upper arm and the lower arm may be 30 degrees or more.

As the swing angle of the upper arm and the swing angle of the lower arm are as large as 30 degrees or more, it is possible to improve the driving performance on unpaved roads and bumps.

In one embodiment, the swing angle of each of the upper arm and the lower arm may be 30 degrees or more and 60 degrees or less.

As the swing angle of the upper arm and the swing angle of the lower arm are large, it is possible to improve the driving performance on unpaved roads and bumps.

In one embodiment, the wheel stroke of the suspension may be 60 mm or more.

As the wheel stroke is as large as 60 mm or more, it is possible to improve the driving performance on unpaved roads and bumps.

In one embodiment, the wheel stroke of the suspension may be 60 mm or more and 150 mm or less.

As the wheel stroke is large, it is possible to improve the driving performance on unpaved roads and bumps.

In one embodiment, the wheel stroke of the suspension may be 0.5 times or more of the length in the longitudinal direction of each of the upper arm and the lower arm.

As the wheel stroke is as large as 0.5 times or more of the length in the longitudinal direction of each of the upper arm and the lower arm, it is possible to improve the driving performance on unpaved roads and bumps.

In one embodiment, the wheel stroke of the suspension may be 0.5 times or more and 0.80 times or less of the length in the longitudinal direction of each of the upper arm and the lower arm.

As the wheel stroke is large, it is possible to improve the driving performance on unpaved roads and bumps.

In one embodiment, the steered wheel may include an inner wheel and an outer wheel; a maximum value of a steering angle of the inner wheel may be 50 degrees or more; and a maximum value of a steering angle of the outer wheel may be 35 degrees or more.

As the steering angle of the steered wheel is large, it is possible to reduce the minimum turning radius of the vehicle, and it is possible to turn in a small radius.

In one embodiment, the maximum value of the steering angle of the inner wheel may be 50 degrees or more and 80 degrees or less, and the maximum value of the steering angle of the outer wheel may be 35 degrees or more and 80 degrees or less.

As the steering angle of the steered wheel is large, it is possible to reduce the minimum turning radius of the vehicle, and it is possible to turn in a small radius.

In one embodiment, the minimum turning radius of the vehicle may be 2.5 times or less of the tread width of the steered wheels.

As the minimum turning radius for the tread width is small, it is possible to turn in a small radius.

In one embodiment, the minimum turning radius of the vehicle may be 1400 mm or less.

As the minimum turning radius of the vehicle is small, it is possible to turn in a small radius.

In one embodiment, an outer diameter of the steered wheel may be 0.26 times or more of the overall length of the vehicle.

As the outer diameter of the steered wheel is as large as 0.26 times or more of the overall length of the vehicle, it is possible to improve the driving performance on unpaved roads and bumps and to improve the ride comfort.

In one embodiment, the outer diameter of the steered wheel may be 0.26 times or more and 0.4 times or less of the overall length of the vehicle.

As the outer diameter of the steered wheel is large relative to the overall length of the vehicle, it is possible to improve the driving performance on unpaved roads and bumps and to improve the ride comfort.

In one embodiment, the outer diameter of the steered wheel may be 0.43 times or more of a wheelbase of the vehicle.

As the outer diameter of the steered wheel is as large as 0.43 times or more of the wheelbase of the vehicle, it is possible to improve the driving performance on unpaved roads and bumps and to improve the ride comfort.

In one embodiment, the outer diameter of the steered wheel may be 0.43 times or more and 0.67 times or less of a wheelbase of the vehicle.

As the outer diameter of the steered wheel is large relative to the wheelbase of the vehicle, it is possible to improve the driving performance on unpaved roads and bumps and to improve the ride comfort.

In one embodiment, the vehicle may be a handle-type electric wheelchair, and may further include a handle that is steered by a passenger, and a seat on which the passenger is seated.

It is possible to realize a handle-type electric wheelchair, wherein the wheel stroke is large and the steering angle of the steered wheel is large.

### ADVANTAGEOUS EFFECTS OF INVENTION

As the anhedral angle of the lower arm is larger than the anhedral angle of the upper arm, with the anhedral angle difference being 5 degrees or more, it is possible to reduce the amount of change in the angle between the longitudinal direction of each of the upper arm and the lower arm and the tire center line when the suspension moves in a stroke. This increases the clearance between the suspension and the steered wheel, and it is possible to both increase the wheel stroke and increase the steering angle of the steered wheel.

### BRIEF DESCRIPTION OF DRAWINGS

FIG. **1** is a perspective view showing a vehicle **1** according to the embodiment.
FIG. **2** is a left side view showing the vehicle **1** according to the embodiment.
FIG. **3** is a front view showing the vehicle **1** according to the embodiment.
FIG. **4A** is a plan view showing an overview of a steering mechanism included in the vehicle **1** according to the embodiment.
FIG. **4B** is a plan view showing an overview of the steering mechanism of the vehicle **1** according to the embodiment.
FIG. **5** is a front view showing a rear suspension **50** according to the embodiment.
FIG. **6** is a block diagram showing the electrical configuration of the vehicle **1** according to the embodiment.
FIG. **7** is a front view showing the front suspension **40** according to the embodiment.
FIG. **8** is a front view showing the front suspension **40** according to the embodiment.
FIG. **9** is a front view showing a front suspension **40a** of a comparative example.
FIG. **10** is a front view showing the front suspension **40a** according to the comparative example.
FIG. **11** is a front view showing the front suspension **40** according to the embodiment.
FIG. **12** is a diagram showing the steering angles of steered wheels **4L** and **4R** according to the embodiment.

### DESCRIPTION OF EMBODIMENTS

An embodiment of the present invention will now be described with reference to the drawings. Like elements are denoted by like reference signs, and will not be described redundantly. The terms front, rear, up, down, left and right, as used in the description below, refer to these directions as seen from a passenger seated in the seat of the vehicle. The left-right direction of the vehicle may be referred to as the vehicle width direction. Note that the following embodiment is illustrative, and the present invention is not limited to the following embodiment.

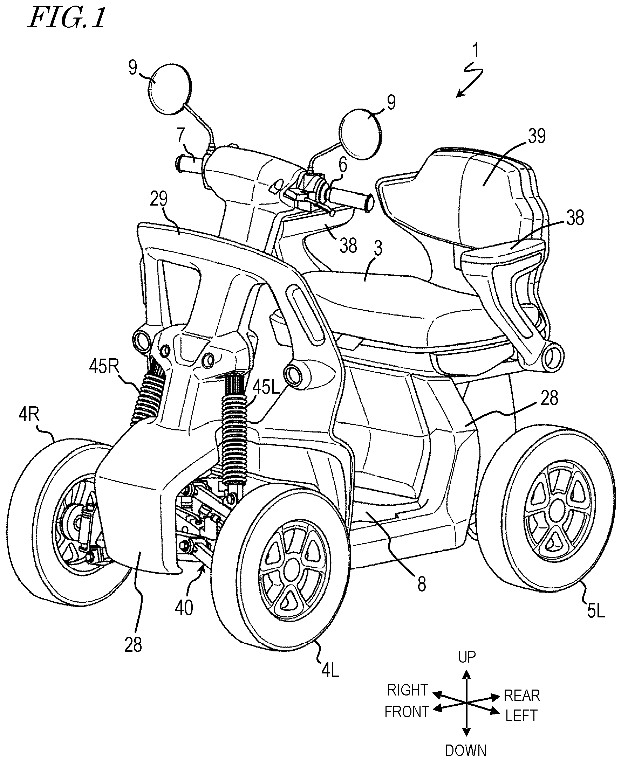

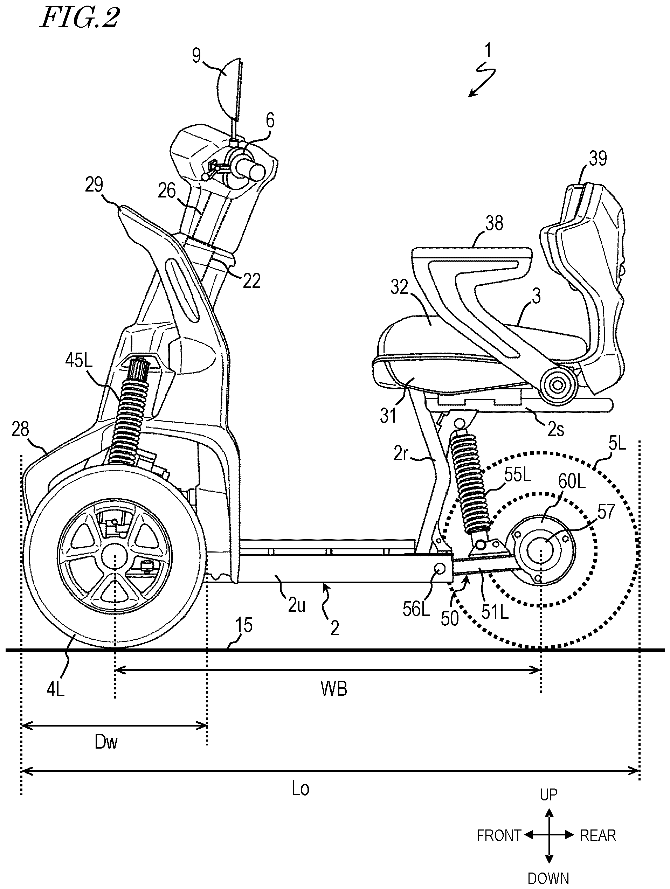

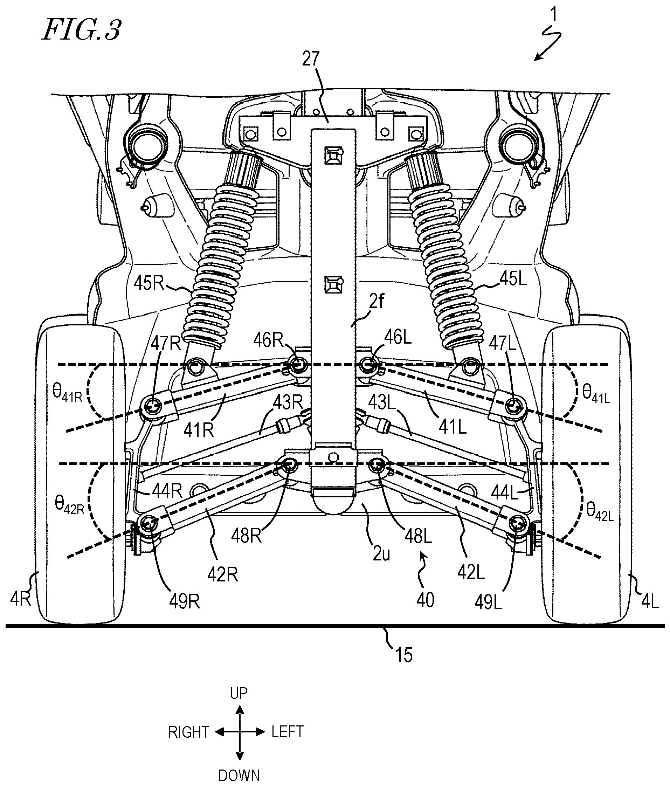

FIG. **1** is a perspective view showing a vehicle **1** according to the embodiment. FIG. **2** is a left side view showing the vehicle **1.** FIG. **3** is a front view showing the vehicle **1.** In order to clearly illustrate the structure of the vehicle **1,** a part of the body cover is omitted in the figures. The vehicle **1** is, for example, a handle-type electric wheelchair, but the present invention is not limited thereto. An example in which the vehicle **1** is a handle-type electric wheelchair will be described below.

The vehicle **1** includes a vehicle body frame **2** (FIG. **2**). The vehicle body frame **2** includes an under frame **2u,** a rear frame **2r,** a seat frame **2s** and a front frame **2f** (FIG. **3**). The under frame **2u** extends in the front-rear direction of the vehicle **1.** The rear frame **2r** extends upward from a rear portion of the under frame **2u,** and the seat frame **2s** extends rearward from an upper portion of the rear frame **2r.** The front frame **2f** extends upward from a front portion of the under frame **2u.**

A head tube **22** (FIG. **2**) is provided on an upper portion of the front frame **2f** (FIG. **3**). The head tube **22** rotatably supports a steering column **26** passing through the inside thereof. A handle **6** that is steered by the passenger is provided on an upper end portion of the steering column **26.** An accelerator operator **7** (FIG. **1**) and a pair of, left and right, rearview mirrors **9** are provided on the handle **6.**

A body cover **28** is provided so as to cover a part of the vehicle body frame **2.** A front guard **29** is provided on the body cover **28.** With the front guard **29** arranged forward of the passenger, it is possible to provide the passenger with a sense of security when driving.

An independent front suspension **40** is provided on the front frame **2f** (FIG. **3**). The front suspension **40** includes an upper arm **41L,** a lower arm **42L** and a shock absorber **45L.** One end of the upper arm **41L** is rotatably supported by the front frame **2f** via a pivot **46L.** The other end of the upper arm **41L** rotatably supports a knuckle arm **44L** via a pivot **47L.** One end of the lower arm **42L** is rotatably supported by the front frame **2f** via a pivot **48L.** The other end of the lower arm **42L** rotatably supports the knuckle arm **44L** via a pivot **49L.** The knuckle arm **44L** rotatably supports the front wheel **4L.**

The front suspension **40** includes an upper arm **41R,** a lower arm **42R** and a shock absorber **45R.** One end of the upper arm **41R** is rotatably supported by the front frame **2f** via a pivot **46R.** The other end of the upper arm **41R** rotatably supports a knuckle arm **44R** via a pivot **47R.** One end of the lower arm **42R** is rotatably supported by the front frame **2f** via a pivot **48R.** The other end of the lower arm **42R** rotatably supports the knuckle arm **44R** via a pivot **49R.** The knuckle arm **44R** rotatably supports the front wheel **4R.** The front suspension **40** rotatably supports the front wheels **4L** and **4R** via the knuckle arms **44L** and **44R.** The front wheels **4L** and **4R** are steered wheels.

The front suspension **40** may be referred to as a double wishbone-type suspension. In the present specification, the arm shape of the double wishbone-type suspension is not limited to the A-letter shape (V-letter shape). In the present specification, "double wishbone-type" is a generic term for a suspension system in which the wheels are supported by a pair of, upper and lower, arms.

The front frame **2F** is provided with a suspension tower **27.** The upper portions of the shock absorbers **45L** and **45R** are rotatably supported by the suspension tower **27.** The lower portion of the shock absorber **45L** rotatably supports the upper arm **41L.** The lower portion of the shock absorber **45R** rotatably supports the upper arm **41R.**

The front frame **2f** extends in the up-down direction at a position in the vicinity of the center in the vehicle width direction. The frame portion to which the suspension is attached is required to have high strength because the impact received by the suspension from the road surface is transmitted thereto. Where the suspension tower **27** is provided in the vicinity of the left and right end portions of the vehicle body, high strength needs to be ensured in the frame portion extending in the left-right direction from the central portion in the vehicle width direction, thereby resulting in a large vehicle body weight. By providing the suspension tower **27** on the front frame **2f** located in the vicinity of the center in the vehicle width direction, there is no longer a need for such a frame portion having high strength and extending in the left-right direction, thereby realizing a reduced vehicle body weight.

The shock absorbers **45L** and **45R** are attached to the upper arms **41L** and **41R.**

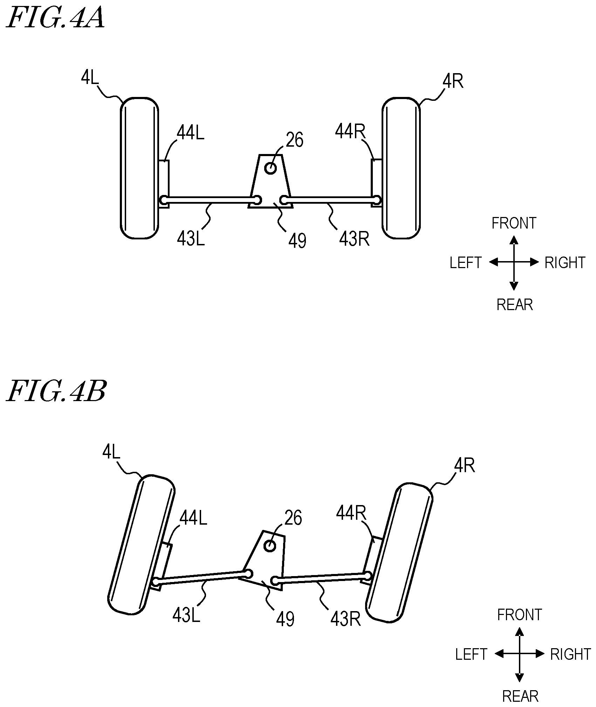

FIG. **4A** and FIG. **4B** are plan views showing an overview of the steering mechanism of the vehicle **1.** A pitman arm **49** is attached to the lower end portion of the steering column **26.** One end of a tie rod **43L** and one end of a tie rod **43R** are each rotatably connected to pitman arm **49.** The other end of the tie rod **43L** is rotatably connected to the knuckle arm **44L.** The other end of the tie rod **43R** is rotatably connected to the knuckle arm **44R.**

FIG. **4A** shows the steering mechanism when traveling straight. When traveling through a curve, the passenger turns the handle **6** (FIG. **1**). Referring to FIG. **4B****,** the steering force generated by the passenger turning the handle **6** is transmitted to the pitman arm **49** via the steering column **26.** The pitman arm **49** rotates around the steering column **26** and the steering force is transmitted to the front wheels **4L** and **4R** via the tie rods **43L** and **43R** and the knuckle arms **44L** and **44R.** The transmitted steering force changes the steering angle of the front wheels **4L** and **4R,** allowing the vehicle **1** to travel while turning left or right.

Referring to FIG. **1** and FIG. **2****,** a seat **3,** on which the passenger is seated, is provided on the seat frame **2s.** The seat **3** includes a seat base **31** provided on the seat frame **2s** and a cushion **32** provided on the seat base **31.**

The seat base **31** is also called a plate member or a bottom plate. The seat base **31** forms the bottom portion of the seat **3** and serves to ensure the strength of the seat **3** as a whole. Therefore, the sheet base **31** is formed from a relatively rigid material. The material of the sheet base **31** can be, for example, but not limited to, a metal material or a synthetic resin material such as polypropylene.

The cushion **32** is overlaid on the surface of the seat base **31.** The cushion **32** can be formed from a material that retains appropriate elasticity over time to maintain good ride comfort. For example, but not limited to, polyurethane foam (urethane foam) can be used as the material for the cushion **32.**

On both sides of the seat **3,** armrests **38** are provided on which the passenger places the arms. The armrests **38** also serve as side guards. At the rear portion of the seat **3,** a backrest **39** is provided on which the passenger leans.

The under frame **2u** is provided with a footboard **8** (FIG. **1**) on which the passenger places the feet. The footboard **8** has a non-slip finish. The upper surface of the footboard **8** has a generally flat shape so that the passenger can easily get in and out of the vehicle.

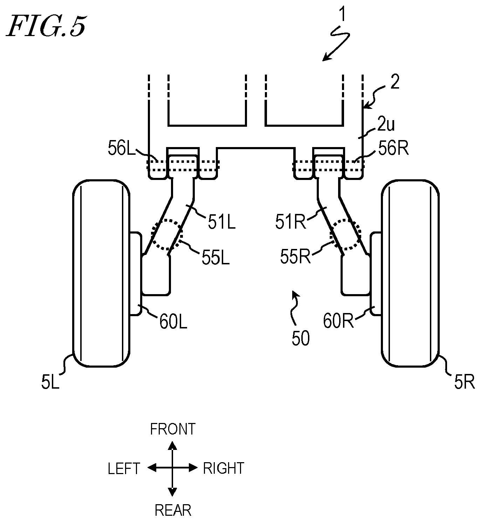

An independent rear suspension **50** (FIG. **2**) is provided at the rear portion of the under frame **2u.** FIG. **5** is a front view showing the rear suspension **50.** The rear suspension **50** may be referred to as a trailing arm suspension.

The rear suspension **50** includes rear arms **51L** and **51R** and shock absorbers **55L** and **55R.** The rear arms **51L** and **51R** are swing arms. The front portion of the rear arm **51L** is rotatably supported on the left rear portion of the under frame **2u** via a pivot **56L.** The front portion of the rear arm **51R** is rotatably supported on the right rear portion of the under frame **2u** via a pivot **56R.**

The upper portion of the shock absorber **55L** and the upper portion of the shock absorber **55R** are each rotatably supported by the rear frame **2r** (FIG. **2**). The lower portion of the shock absorber **55L** rotatably supports the rear arm **51L.** The lower portion of the shock absorber **55R** rotatably supports the rear arm **51R.**

An electric motor **60L** is provided at the rear portion of the rear arm **51L.** The electric motor **60L** is an in-wheel motor, and the rear wheel **5L** is provided on the electric motor **60L.** The rear suspension **50** rotatably supports the rear wheel **5L** via the electric motor **60L.** The electric motor **60R** is provided at the rear portion of the rear arm **51R.** The electric motor **60R** is an in-wheel motor, and the rear wheel **5R** is provided on the electric motor **60R.** The rear suspension **50** rotatably supports the rear wheel **5R** via the electric motor **60R.** The rear wheels **5L** and **5R** are drive wheels.

The vehicle **1** of the present embodiment employs large-sized wheels **4L, 4R, 5L** and **5R.** The outer diameters of the front wheels and the rear wheels are, for example, but not limited to, 14 inches or more. By employing larger-sized front wheels and rear wheels, it is possible to improve the driving performance on unpaved roads and bumps.

In the present embodiment, two electric motors **60L** and **60R** are used to drive the rear wheels **5L** and **5R** independently of each other. By controlling the rotation of the left wheels and that of the right wheels independently, it is possible to enhance the stability of the behavior of the vehicle **1** when turning. With vehicles that have differential gears, when one drive wheel idles, it is difficult for the driving force to be transmitted to the other drive wheel. In the present embodiment, even if one of the rear wheels **5L** and **5R** idles, the other can provide grip so as to continue driving stably.

Note that the electric motors driving the rear wheels **5L** and **5R** are not limited to in-wheel motors. For example, a single electric motor may transmit driving power to the rear wheels **5L** and **5R.**

Although a two-wheel drive configuration is illustrated here in which the electric motors **60L** and **60R** drive the rear wheels **5L** and **5R,** the vehicle **1** may be four-wheel drive. In that case, in-wheel motors are also provided for each of the front wheels **4L** and **4R.** Note that the driving force may be transmitted from one electric motor to the front wheels **4L** and **4R.** The driving force may be transmitted from one electric motor to each of the front wheels **4L** and **4R** and the rear wheels **5L** and **5R.**

The vehicle **1** of the present embodiment includes the independent front suspension **40** and the independent rear suspension **50.** Two electric motors **60L** and **60R** are used to drive the rear wheels **5L** and **5R** independently of each other. Thus, it is possible to improve the ability to follow road surface irregularities and stably transmit driving force to the road surface. It is also possible to improve the turning performance of the vehicle. According to the present embodiment, it is possible to improve the vehicle's driving performance on unpaved roads and bumps.

Note that the rear suspension **50** is not limited to an independent suspension, but may be an axle suspension.

The present embodiment employs in-wheel motors as the electric motor. This eliminates the need to ensure space for arranging the electric motor and the power transmission mechanism in the body part of the vehicle, thereby saving space. Since a drive shaft extending in the left-right direction of the vehicle **1** is not required, the rear suspension **50** is not restricted by the drive shaft. In the rear suspension **50,** the rear arms **51L** and **51R** extend in the front-rear direction and the pivots **56L** and **56R** are located forward relative to a rotation shaft **57** of the rear wheel **5L** and **5R.** With such a configuration, it is possible to increase the wheel stroke of the rear suspension **50.**

The wheel stroke of the rear suspension **50** is, for example, but not limited to, 60 mm or more. As the wheel stroke is as large as 60 mm or more, it is possible to improve the driving performance on unpaved roads and bumps. The upper limit of the wheel stroke of the rear suspension **50** may vary depending on the size of the vehicle **1,** and is for example, but not limited to, 150 mm.

Since the drive shaft is not needed and the rear arms **52L** and **51R** are not located near the central portion of the rear of the vehicle, it is possible to ensure space near the central portion of the rear of the vehicle. The space near the central portion of the rear of the vehicle makes it difficult for the main body portion of the vehicle to come into contact with the ground even when a large difference in position in the up-down direction occurs between the left and right rear wheels **5L** and **5R** in response to the operation of the independent rear suspension **50.** Note that if the drive power is transmitted to the rear wheels **5L** and **5R** from a single electric motor instead of using in-wheel motors, the vehicle **1** may include a drive shaft.

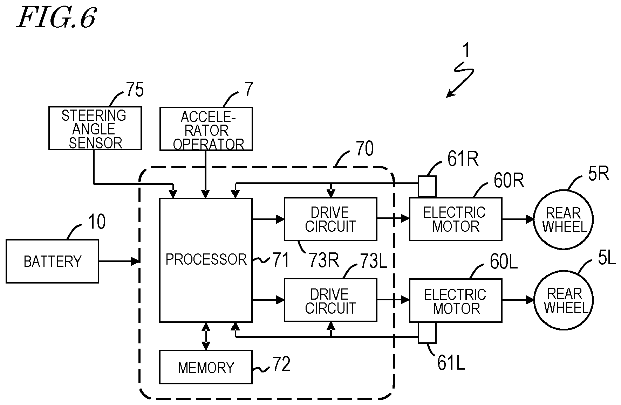

Next, the control of the electric motors **60L** and **60R** will be described. FIG. **6** is a block diagram showing the electrical configuration of the vehicle **1.** The vehicle **1** includes a control device **70.** The control device **70** controls the operation of the vehicle **1.** The control device **70** is, for example, a Motor Control Unit (MCU). Typically, the control device **70** includes a semiconductor integrated circuit, such as a microcontroller, a signal processor, etc., capable of performing digital signal processing.

The control device **70** includes a processor **71,** a memory **72** and drive circuits **73L** and **73R.** The processor **71** controls the operation of the electric motors **60L** and **60R** and the operation of the various parts of the vehicle **1.** The memory **72** stores a computer program that defines procedures for controlling the operation of the electric motors **60L** and **60R** and the various parts of the vehicle **1.** The processor **71** reads the computer program from the memory **72** and performs various controls. The control device **70** is supplied with electric power from the battery **10.** The control device **70** and the battery **10** can be installed at any position of the vehicle **1,** for example, but not limited to, downward of the seat **3.** The battery **10** can be provided so as to be removable from the vehicle **1.** For example, the battery **10** may be attached/removed to/from the rear of the seat **3.** By arranging the battery **10** at an end portion of the vehicle around the seat **3,** the passenger can easily attach/remove the battery **10.**

The accelerator operator **7** outputs to the processor **71** a signal in accordance with the amount by which the accelerator is operated by the passenger. The steering angle sensor **75** is provided on the head tube **22** or the steering column **26,** for example, and outputs a signal to the processor **71** in accordance with the angle of rotation of the steering column **26.**

The electric motor **60L** is provided with a rotation sensor **61L.** The rotation sensor **61L** detects the rotation angle of the electric motor **60L** and outputs a signal in accordance with the rotation angle to the processor **71** and the drive circuit **73L.** The processor **71** and the drive circuit **73L** calculate the rotation speed of the electric motor **60L** from the output signal of the rotation sensor **61L.**

The electric motor **60R** is provided with a rotation sensor **61R.** The rotation sensor **61R** detects the rotation angle of the electric motor **60R** and outputs a signal in accordance with the rotation angle to the processor **71** and the drive circuit **73R.** The processor **71** and the drive circuit **73R** calculate the rotation speed of the electric motor **60R** from the output signal of the rotation sensor **61R.** The sizes of the rear wheels **5L** and **5R** are stored in the memory **72** in advance, and the driving speed of the vehicle **1** can be calculated from the rotation speed of the electric motors **60L** and **60R.**

The processor **71** calculates, and transmits to the drive circuits **73L** and **73R,** a command value for generating an appropriate driving force from the output signal of the accelerator operator **7,** the output signal of the steering angle sensor **75,** the traveling speed of the vehicle, and information stored in the memory **72,** etc. The processor **71** can send different command values to the drive circuits **73L** and **73R** depending on the driving condition of the vehicle.

The drive circuits **73L** and **73R** are, for example, inverters. The drive circuit **73L** supplies a drive current in accordance with the command value from the processor **71** to the electric motor **60L.** The drive circuit **73R** supplies the drive current in accordance with the command value from the processor **71** to the electric motor **60L.** The electric motors **60L** and **60R** to which the drive current is supplied rotate, thereby causing the rear wheels **5L** and **5R** to rotate. If the electric motors **60L** and **60R** include decelerators, the rotation is transmitted to the rear wheels **5L** and **5R** via those decelerators.

As described above, the vehicle **1** of the present embodiment includes wheels **4L, 4R, 5L** and **5R** with a larger outer diameter. Thus, it is possible to improve the running performance on unpaved roads and bumps. On the other hand, the overall length (length in the front-rear direction) of the vehicle **1** may be limited. For example, the Japanese Industrial Standards "JIS T 9208:2016" for handle-type electric wheelchairs limits the overall length of the vehicle to 1200 mm or less. Thus, where the overall length of the vehicle **1** is limited, the wheelbase will be shorter if the outer diameter of the wheels is increased.

Referring to FIG. **2****,** the outer diameters Dw of the wheels **4L, 4R, 5L** and **5R** of the present embodiment are relatively large, for example, more than 0.26 times the overall length Lo of the vehicle **1.** The outer diameter Dw of the wheels is relatively large, for example, more than 0.43 times the wheelbase WB of the vehicle **1.** Thus, if the size of the wheel is relatively large, it is difficult to increase the steering angle of the wheel. The upper limit of the outer diameter Dw of the wheel is, for example, but not limited to, 0.4 times the overall length Lo of the vehicle **1.** The wheel outer diameter Dw is, for example, but not limited to, at most 0.67 times the wheelbase WB.

When a wheel with a large outer diameter and width is used as a steered wheel, the suspension supporting the steered wheel and the steered wheel are more likely to interfere with each other, making it difficult to increase the steering angle of the steered wheel. However, vehicles such as handle-type electric wheelchairs are required to be able to turn in a small radius, and the steering angle of the steered wheels is required to be large. When wheels with a large outer diameter and width are used, it is easy for the wheels to interfere with the suspension when the wheels stroke in the up-down direction, thereby making it difficult to increase the wheel stroke.

The front suspension **40** of the present embodiment, with which it is possible to increase the steering angle and the wheel stroke will now be described in detail.

Referring to FIG. **3****,** the angles of the upper arms **41L** and **41R** and the lower arms **42L** and **42R** will be described.

FIG. **3** shows the vehicle **1** in a predetermined state, stationary on a level road surface **15** with a weight having a mass of 75 kg on the seat **3** (FIG. **1**). The weight is one of the weights specified in the Japanese Industrial Standards "JIS T 9208:2016" for handle-type electric wheelchairs. With such a weight on the seat **3,** it is possible to simulate the state where a human rides in the vehicle **1.**

As shown in FIG. **3****,** the upper arm **41L** and the lower arm **42L** of the front suspension **40** are inclined so that the height gradually decreases from the central portion in the vehicle width direction (the left-right direction) to the left. That is, the upper arm **41L** and the lower arm **42L** have anhedral angles θ_{41L} and θ_{42L}. The anhedral angle is the angle between the vehicle width direction and the longitudinal direction of the arm as the front suspension **40** is viewed from front. When the vehicle **1** is stationary on the level road surface **15,** the vehicle width direction can be parallel to the horizontal direction. The longitudinal direction of the arm is, for example, the direction extending from the center of the pivot on the front frame **2f** side toward the center of the pivot on the knuckle arm side. The anhedral angle may be referred to as a negative dihedral angle.

The upper arm **41R** and the lower arm **42R** of the front suspension **40** are inclined so that the height gradually decreases from the central portion in the vehicle width direction toward the right side. That is, the upper arm **41R** and the lower arm **42R** have anhedral angles θ_{41R} and θ_{42R}.

The anhedral angles θ_{41L} and θ_{41R} of the upper arms **41L** and **41R** are 15 degrees or more, for example. The anhedral angles θ_{42L} and θ_{42R} of the lower arms **42L** and **42R** are 20 degrees or more, for example. With the large anhedral angles of the arms, it is possible to increase the roll rigidity of the vehicle **1.** The upper limit of the anhedral angles θ_{41L} and θ_{41R} of the upper arms **41L** and **41R** is, for example, but not limited to, 20 degrees. The upper limit of the anhedral angle θ_{42L} and θ_{42R} of the lower arms **42L** and **42R** is, for example, but not limited to, 25 degrees. Needless to say, each arm of the front suspension **40** has an anhedral angle even when the above-mentioned weight is absent on the seat **3** (corresponding to a state where no passenger is on board).

In the present embodiment, the anhedral angle θ_{42L} of the lower arm **42L** is greater than the anhedral angle θ_{41L} of the upper arm **41L.** The difference between the anhedral angle θ_{42L} of the lower arm **42L** and the anhedral angle θ_{41L} of the upper arm **41L** is, for example, 5 degrees or more. The anhedral angle θ_{42R} of the lower arm **42R** is greater than the anhedral angle θ_{41R} of the upper arm **41R.** The difference between the anhedral angle θ_{42R} of the lower arm **42R** and the anhedral angle θ_{41R} of the upper arm **41R** is, for example, 5 degrees or more. By setting the difference between the anhedral angle of the lower arm and the anhedral angle of the upper arm to 5 degrees or more, it is possible to obtain a desired amount of change in the camber angle as will be described below. The upper limit of the difference between the anhedral angle of the lower arm and the anhedral angle of the upper arm is, for example, but not limited to, 9 degrees. For example, the upper limit of the anhedral angle difference may be 8 degrees.

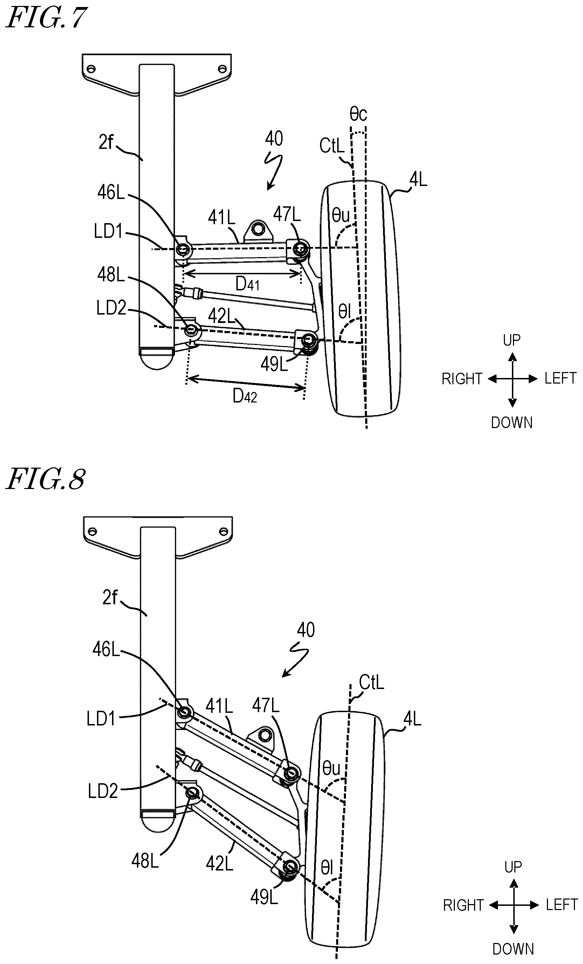

FIG. **7** and FIG. **8** are front views showing the front suspension **40.** The features of the upper arm **41L,** the lower arm **42L,** the knuckle arm **44L** and the front wheel **4L** will now be described primarily, but the features of the upper arm **41R,** the lower arm **42R,** the knuckle arm **44R** and the front wheel **4R** are the same. Since the steered wheels in the present embodiment are the front wheels, the front wheels may be referred to as the steered wheels.

FIG. **7** shows the front suspension **40** when the steered wheel **4L** moves in the upward direction, i.e., when the front suspension **40** is retracted. FIG. **8** shows the front suspension **40** when the steered wheel **4L** moves in the downward direction, i.e., when the front suspension **40** is extended.

The present inventors have found that by making the anhedral angle θ_{42L} of the lower arm **42L** (FIG. **3**) larger than the anhedral angle θ_{41L} of the upper arm **41L,** it is possible to increase the amount of change in the camber angle θc of the steered wheel **4L** when the front suspension **40** strokes. For example, the amount of change in the camber angle θc with respect to the wheel stroke can be set to 5 degrees or more.

As the camber angle θc changes significantly in response to the stroke of the front suspension **40,** it is possible to reduce the amount of change in the angle θu between the longitudinal direction LD1 of the upper arm **41L** and the tire center line CtL when the front suspension **40** strokes. It is possible to reduce the amount of change in the angle θl between the longitudinal direction LD2 of the lower arm **42L** and the tire center line CtL when the front suspension **40** strokes.

The amount of change in the angle between the longitudinal direction of the arm and the tire center line means that there is little change in the positional relationship between the arm and the steered wheel. Thus, it is possible to increase the clearance between the front suspension **40** and the steered wheel **4L.** As the clearance is large, it is possible to increase the steering angle of the steered wheel **4L** and also to increase the wheel stroke.

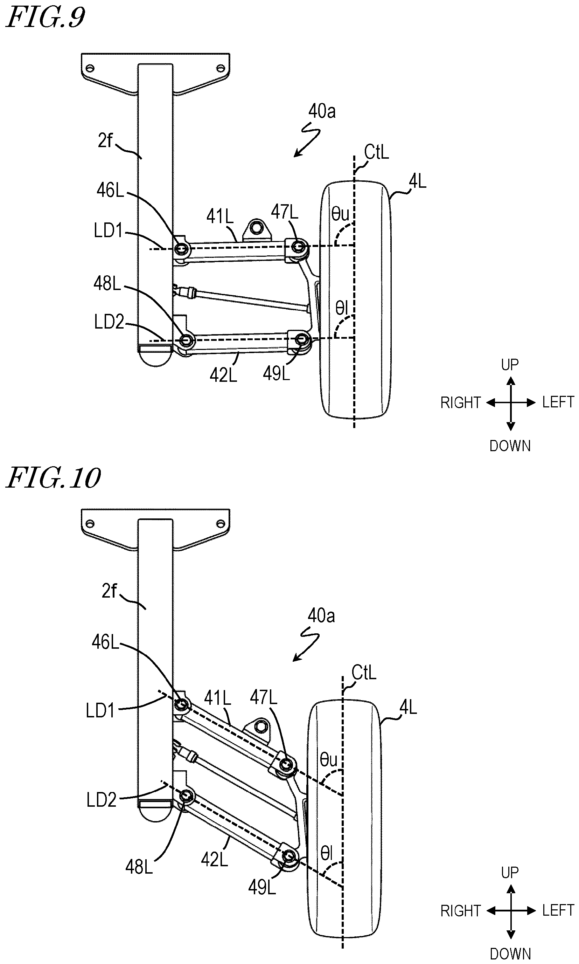

FIG. **9** and FIG. **10** are front views showing, as a comparative example, a front suspension **40a** where the anhedral angle θ_{42L} of the lower arm **42L** (FIG. **3**) and the anhedral angle θ_{41L} of the upper arm **41L** are equal to each other. In the front suspension **40a,** the longitudinal direction LD1 of the upper arm **41L** is parallel to the longitudinal direction LD2 of the lower arm **42L.** FIG. **9** shows the front suspension **40a** when the steered wheel **4L** moves in the upward direction. FIG. **10** shows the front suspension **40a** when the steered wheel **4L** moves in the downward direction.

When the front suspension **40a** moves in a stroke, the camber angle does not substantially change. Therefore, the amount of change in the angle θu between the longitudinal direction LD1 of the upper arm **41L** and the tire center line CtL when moving in a stroke is large. Similarly, the amount of change in the angle θl between the longitudinal direction LD2 of the lower arm **42L** and the tire center line CtL when moving in a stroke is large.

The amount of change in the angle between the longitudinal direction of the arm and the tire center line being large means that the change in the positional relationship between the arm and the steered wheel is large. As the positional relationship between the arm and the steered wheel changes significantly, it is difficult to ensure clearance.

On the other hand, as described above, with the front suspension **40** of the present embodiment, the change in the positional relationship between the arm and the steered wheel is small. Thus, it is possible to increase the clearance between the front suspension **40** and the steered wheel **4L,** and it is possible to increase the steering angle of the steered wheel **4L** and to increase the wheel stroke.

In the present embodiment, when the front suspension **40** makes a bound stroke, the camber angle θc of the steered wheel **4L** can be a negative camber. When the front suspension **40** makes a rebound stroke, the camber angle θc of the steered wheel **4L** can be a positive camber. By varying the camber angle θc between the negative camber and the positive camber in response to the stroke of the front suspension **40,** it is possible to reduce the amount of change in the angle between the longitudinal direction of the arm and the tire center line.

Note that the upper limit of the amount of change in the camber angle θc with respect to wheel stroke is, for example, but not limited to, 10 degrees.

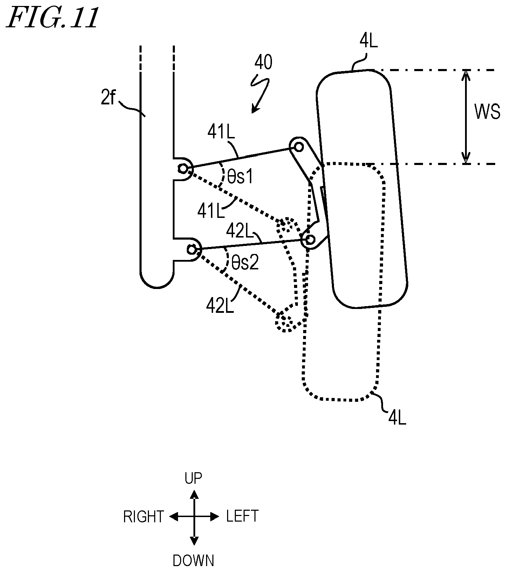

FIG. **11** is a front view showing the front suspension **40** of the present embodiment. FIG. **11** shows the front suspension **40** in the bound stroke state is indicated by a solid line, and the front suspension **40** in the rebound stroke state is indicated by a dotted line.

In the present embodiment, since it is possible to increase the clearance between the front suspension **40** and the steered wheel **4L,** it is possible to increase the arm swing angle and the wheel stroke.

The swing angle θs1 of the upper arm **41L** and the swing angle θs2 of the lower arm **42L** are each 30 degrees or more, for example. With the large swing angle of 30 degrees or more, it is possible to improve the driving performance on unpaved roads and bumps. The wheel stroke WS is, for example, 60 mm or more. With the large wheel stroke WS of 60 mm or more, it is possible to improve the driving performance on unpaved roads and bumps.

The wheel stroke WS is 0.5 times or more of the length D₄₁ (FIG. **7**) in the longitudinal direction of the upper arm **41L** and 0.5 times or more of the length D₄₂ in the longitudinal direction of the lower arm **42L.** The length in the longitudinal direction of the arm is, for example, the length between the center of the pivot on the front frame **2F** side and the center of the pivot on the knuckle arm side. As the wheel stroke WS is large relative to the length of the arm, it is possible to improve the driving performance on unpaved roads and bumps.

The upper limit of the swing angles θs1 and θs2 is, for example, but not limited to, 60 degrees. The upper limit of the wheel stroke WS is, for example, but not limited to, 150 mm. The wheel stroke WS is, for example, but not limited to, at maximum 0.80 times the length in the longitudinal direction of the arm.

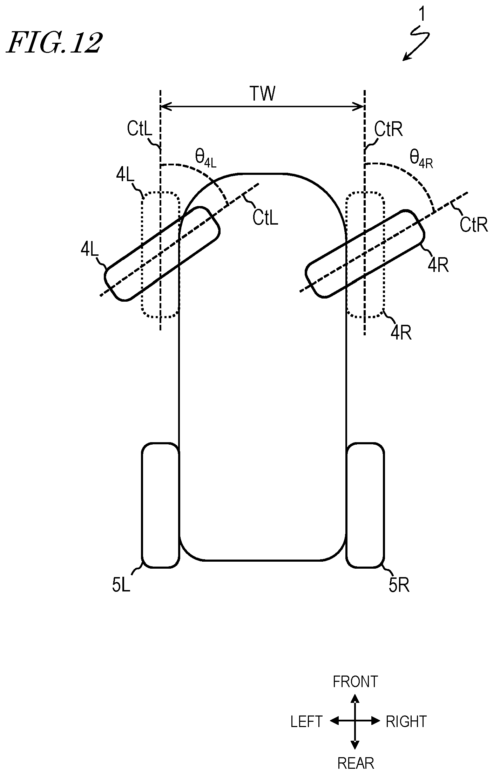

Next, the steering angle of the steered wheels **4L** and **4R** will be described. FIG. **12** are views showing the steering angle of the steered wheels **4L** and **4R.** The reference signs CtL and CtR in FIG. **12** represent the tire center lines of the steered wheels **4L** and **4R.** FIG. **12** shows the steering angle when the vehicle **1** is turning right. In the present embodiment, since it is possible to increase the clearance between the front suspension **40** and the steered wheel **4L,** it is possible to increase the steering angle of the steered wheels **4L** and **4R.**

When the vehicle **1** turns right, the steered wheel **4R** is the inner wheel and the steered wheel **4L** is the outer wheel. In the present embodiment, the maximum value of the steering angle of the inner wheel is, for example, 50 degrees or more, and the maximum value of the steering angle of the outer wheel is, for example, 35 degrees or more.

In this example, the steering angle of the inner wheel is larger than the steering angle of the outer wheel. Such a relationship in the steering angle between the inner wheel and the outer wheel can be achieved, for example, by employing Ackermann-type steering. It may also be realized, for example, by a steering system in which the steering angle of the inner wheel and the steering angle of the outer wheel are controlled independently of each other.

As described above, with the steering angles of the steered wheels **4L** and **4R** are large, it is possible to reduce the minimum turning radius of the vehicle **1,** and it is possible to turn in a small radius. The maximum value of the steering angle of the inner wheel is, for example, but not limited to, 80 degrees or less. The maximum value of the steering angle of the outer wheel is, for example, but not limited to, 80 degrees or less.

As described above, in the present embodiment, it is possible to reduce the minimum turning radius of the vehicle **1.** For example, the minimum turning radius of the vehicle **1** can be as small as 2.5 times or less of the tread width TW of the steered wheels **4L** and **4R.** The minimum turning radius of the vehicle **1** is, for example, 1400 mm or less. As the minimum turning radius of the vehicle **1** is small, it is possible to turn in a small radius.

While the vehicle **1** is a four-wheeled handle-type electric wheelchair in the description of the embodiment above, the vehicle **1** is not limited thereto. The vehicle **1** may be a joystick-type electric wheelchair. The vehicle **1** is not limited to a wheelchair, but may be another vehicle.

The number of wheels of the vehicle **1** is not limited to four wheels. The number of wheels may be three or more. The drive source for driving the wheels is not limited to an electric motor, but may be an internal combustion engine. The driving force may be transmitted from one drive source to multiple wheels.

An illustrative embodiment of the present invention has been described above.

The vehicle **1** according to one embodiment of the present invention includes: at least three wheels including a steered wheel **4L, 4R;** at least one drive source **60L, 60R** that drives at least two of the wheels; and a front suspension **40** having an upper arm **41L, 41R** and a lower arm **42L, 42R** supporting the steered wheel **4L, 4R,** wherein: in a state where the vehicle **1** is stationary on a level road surface **15,** an anhedral angle of the lower arm **42L, 42R** is larger than an anhedral angle of the upper arm **41L, 41R;** and a difference between the anhedral angle of the lower arm **42L, 42R** and the anhedral angle of the upper arm **41L, 41R** is 5 degrees or more.

As the anhedral angle of the lower arm **42L, 42R** is larger than the anhedral angle of the upper arm **41L, 41R,** with the anhedral angle difference being 5 degrees or more, it is possible to reduce the amount of change in the angle between the longitudinal direction of each of the upper arm **41L, 41R** and the lower arm **42L, 42R** and the tire center line when the front suspension **40** moves in a stroke. This increases the clearance between the front suspension **40** and the steered wheel **4L, 4R,** and it is possible to both increase the wheel stroke WS and increase the steering angle of the steered wheel **4L, 4R.**

In one embodiment, the difference between the anhedral angle of the lower arm **42L, 42R** and the anhedral angle of the upper arm **41L, 41R** may be 5 degrees or more and 9 degrees or less.

As the difference between the anhedral angle of the lower arm **42L, 42R** and the anhedral angle of the upper arm **41L, 41R** is large, it is possible to reduce the amount of change in the angle between the longitudinal direction of each of the upper arm **41L, 41R** and the lower arm **42L, 42R** and the tire center line when the suspension **40** moves in a stroke.

In one embodiment, the amount of change in a camber angle of the steered wheel **4L, 4R** relative to the wheel stroke WS of the front suspension **40** may be 5 degrees or more.

As the camber angle of the steered wheel **4L, 4R** significantly changes in response to the stroke of the front suspension **40,** it is possible to reduce the amount of change in the angle between the longitudinal direction of each of the upper arm **41L, 41R** and the lower arm **42L, 42R** and the tire center line.

In one embodiment, the amount of change in the camber angle of the steered wheel **4L, 4R** relative to the wheel stroke WS of the front suspension **40** may be 5 degrees or more and 10 degrees or less.

As the camber angle of the steered wheel **4L, 4R** significantly changes in response to the stroke of the front suspension **40,** it is possible to reduce the amount of change in the angle between the longitudinal direction of each of the upper arm **41L, 41R** and the lower arm **42L, 42R** and the tire center line.

In one embodiment, when the front suspension **40** moves in a bound stroke, the camber angle of the steered wheel **4L, 4R** may be a negative camber; and when the front suspension **40** moves in a rebound stroke, the camber angle of the steered wheel **4L, 4R** may be a positive camber.

As the camber angle changes between a negative camber and a positive camber in response to the stroke of the front suspension **40,** it is possible to reduce the amount of change in the angle between the longitudinal direction of each of the upper arm **41L, 41R** and the lower arm **42L, 42R** and the tire center line.

In one embodiment, in a state where the vehicle **1** is stationary on the level road surface **15,** the anhedral angle of the upper arm **41L, 41R** may be 15 degrees or more, and the anhedral angle of the lower arm **42L, 42R** may be 20 degrees or more.

As the anhedral angle of the upper arm **41L, 41R** and the anhedral angle of the lower arm **42L, 42R** are as large as 15 degrees or more and 20 degrees or more, respectively, it is possible to increase the roll rigidity.

In one embodiment, in a state where the vehicle **1** is stationary on the level road surface **15,** the anhedral angle of the upper arm **41L, 41R** may be 15 degrees or more and 20 degrees or less, and the anhedral angle of the lower arm **42L, 42R** may be 20 degrees or more and 25 degrees or less.

As the anhedral angle of the upper arm **41L, 41R** and the anhedral angle of the lower arm **42L, 42R** are large, it is possible to increase the roll rigidity.

In one embodiment, a swing angle of each of the upper arm **41L, 41R** and the lower arm **42L, 42R** may be 30 degrees or more.

As the swing angle of the upper arm **41L, 41R** and the swing angle of the lower arm **42L, 42R** are as large as 30 degrees or more, it is possible to improve the driving performance on unpaved roads and bumps.

In one embodiment, the swing angle of each of the upper arm **41L, 41R** and the lower arm **42L, 42R** may be 30 degrees or more and 60 degrees or less.

As the swing angle of the upper arm **41L, 41R** and the swing angle of the lower arm **42L, 42R** are large, it is possible to improve the driving performance on unpaved roads and bumps.

In one embodiment, the wheel stroke WS of the front suspension **40** may be 60 mm or more.

As the wheel stroke WS is as large as 60 mm or more, it is possible to improve the driving performance on unpaved roads and bumps.

In one embodiment, the wheel stroke WS of the front suspension **40** may be 60 mm or more and 150 mm or less.

As the wheel stroke WS is large, it is possible to improve the driving performance on unpaved roads and bumps.

In one embodiment, the wheel stroke WS of the front suspension **40** may be 0.5 times or more of the length in the longitudinal direction of each of the upper arm **41L, 41R** and the lower arm **42L, 42R.**

As the wheel stroke WS is as large as 0.5 times or more of the length in the longitudinal direction of each of the upper arm **41L, 41R** and the lower arm **42L, 42R,** it is possible to improve the driving performance on unpaved roads and bumps.

In one embodiment, the wheel stroke WS of the front suspension **40** may be 0.5 times or more and 0.80 times or less of the length in the longitudinal direction of each of the upper arm **41L, 41R** and the lower arm **42L, 42R.**

As the wheel stroke WS is large, it is possible to improve the driving performance on unpaved roads and bumps.

In one embodiment, the steered wheel **4L, 4R** may include an inner wheel and an outer wheel; a maximum value of a steering angle of the inner wheel may be 50 degrees or more; and a maximum value of a steering angle of the outer wheel may be 35 degrees or more.

As the steering angle of the steered wheel **4L, 4R** is large, it is possible to reduce the minimum turning radius of the vehicle **1,** and it is possible to turn in a small radius.

In one embodiment, the maximum value of the steering angle of the inner wheel may be 50 degrees or more and 80 degrees or less; and the maximum value of the steering angle of the outer wheel may be 35 degrees or more and 80 degrees or less.

As the steering angle of the steered wheel **4L, 4R** is large, it is possible to reduce the minimum turning radius of the vehicle **1,** and it is possible to turn in a small radius.

In one embodiment, the minimum turning radius of the vehicle **1** may be 2.5 times or less of the tread width of the steered wheels **4L, 4R.**

As the minimum turning radius for the tread width is small, it is possible to turn in a small radius.

In one embodiment, the minimum turning radius of the vehicle **1** may be 1400 mm or less.

As the minimum turning radius of the vehicle **1** is small, it is possible to turn in a small radius.

In one embodiment, an outer diameter Dw of the steered wheel **4L, 4R** may be 0.26 times or more of an overall length Lo of the vehicle **1.**

As the outer diameter Dw of the steered wheel **4L, 4R** is as large as 0.26 times or more of the overall length Lo of the vehicle **1,** it is possible to improve the driving performance on unpaved roads and bumps and to improve the ride comfort.

In one embodiment, the outer diameter Dw of the steered wheel **4L, 4R** may be 0.26 times or more and 0.4 times or less of the overall length Lo of the vehicle **1.**

As the outer diameter Dw of the steered wheel **4L, 4R** is large relative to the overall length Lo of the vehicle **1,** it is possible to improve the driving performance on unpaved roads and bumps and to improve the ride comfort.

In one embodiment, the outer diameter Dw of the steered wheel **4L, 4R** may be 0.43 times or more of a wheelbase of the vehicle **1.**

As the outer diameter Dw of the steered wheel **4L, 4R** is as large as 0.43 times or more of the wheelbase of the vehicle **1,** it is possible to improve the driving performance on unpaved roads and bumps and to improve the ride comfort.

In one embodiment, the outer diameter Dw of the steered wheel **4L, 4R** may be 0.43 times or more and 0.67 times or less of a wheelbase of the vehicle **1.**

As the outer diameter Dw of the steered wheel **4L, 4R** is large relative to the wheelbase of the vehicle **1,** it is possible to improve the driving performance on unpaved roads and bumps and to improve the ride comfort.

In one embodiment, the vehicle **1** may be a handle-type electric wheelchair, and may further include a handle **6** that is steered by a passenger, and a seat **3** on which the passenger is seated.

It is possible to realize a handle-type electric wheelchair, wherein the wheel stroke WS is large and the steering angle of the steered wheel **4L, 4R** is large.

### INDUSTRIAL APPLICABILITY

The present invention is particularly useful in the field of vehicles.

### REFERENCE SIGNS LIST

1: Vehicle (handle-type electric wheelchair), 2: Vehicle body frame, 2f: Front frame, 2u: Under frame, 2r: Rear frame, 2s: Seat frame, 3: Seat, 4L, 4R: Front wheel, 5L, 5R: Rear wheel, 6: Handle, 7: Accelerator operator, 8: Footboard, 9: Rearview mirror, 10: Battery, 15: Road surface, 22: Head tube, 26: Steering column, 27: Suspension tower, 28: Body cover, 29: Front guard, 31: Seat base, 32: Cushion, 38: Armrest, 39: Backrest, 40: Front suspension, 41L, 41R: Upper arm, 42L, 42R: Lower arm, 43L, 43R: Tie rod, 44L, 44R: Knuckle arm, 45L, 45R: Shock absorber, 46L, 46R: Pivot, 47L, 47R: Pivot, 48L, 48R: Pivot, 49L, 49R: Pivot, 49: Pitman arm, 50: Rear suspension, 51L, 51R: Rear arm, 55L, 55R: Shock absorber, 56L, 56R: Pivot shaft, 57: Rotation shaft, 60L, 60R: Electric motor, 61L, 61R: Rotation sensor, 70: Control device, 71: Processor, 72: Memory, 73L, 73R: Drive circuit, 75: Steering angle sensor

## Claims

1. A vehicle comprising:
at least three wheels including a steered wheel;
at least one drive source that drives at least two of the wheels; and
a suspension having an upper arm and a lower arm supporting the steered wheel, wherein:
in a state where the vehicle is stationary on a level road surface,
an anhedral angle of the lower arm is larger than an anhedral angle of the upper arm; and
a difference between the anhedral angle of the lower arm and the anhedral angle of the upper arm is 5 degrees or more.

2. The vehicle according to claim 1, wherein the difference between the anhedral angle of the lower arm and the anhedral angle of the upper arm is 5 degrees or more and 9 degrees or less.

3. The vehicle according to claim 1 or 2, wherein the amount of change in a camber angle of the steered wheel relative to a wheel stroke of the suspension is 5 degrees or more.

4. The vehicle according to claim 3, wherein the amount of change in the camber angle of the steered wheel relative to the wheel stroke of the suspension is 5 degrees or more and 10 degrees or less.

5. The vehicle according to any one of claims 1 to 4, wherein:
when the suspension moves in a bound stroke, the camber angle of the steered wheel is a negative camber; and
when the suspension moves in a rebound stroke, the camber angle of the steered wheel is a positive camber.

6. The vehicle according to any one of claims 1 to 5, wherein:
in a state where the vehicle is stationary on a level road surface,
the anhedral angle of the upper arm is 15 degrees or more; and
the anhedral angle of the lower arm is 20 degrees or more.

7. The vehicle according to claim 6, wherein:
in a state where the vehicle is stationary on a level road surface,
the anhedral angle of the upper arm is 15 degrees or more and 20 degrees or less; and
the anhedral angle of the lower arm is 20 degrees or more and 25 degrees or less.

8. The vehicle according to any one of claims 1 to 7, wherein a swing angle of the upper arm and a swing angle of the lower arm are each 30 degrees or more.

9. The vehicle according to claim 8, wherein the swing angle of the upper arm and the swing angle of the lower arm are each 30 degrees or more and 60 degrees or less.

10. The vehicle according to any one of claims 1 to 9, wherein a wheel stroke of the suspension is 60 mm or more.

11. The vehicle according to claim 10, wherein the wheel stroke of the suspension is 60 mm or more and 150 mm or less.

12. The vehicle according to any one of claims 1 to 11, wherein a wheel stroke of the suspension is 0.5 times or more of a length in a longitudinal direction of each of the upper arm and the lower arm.

13. The vehicle according to claim 12, wherein the wheel stroke of the suspension is 0.5 times or more and 0.8 times or less of a length in the longitudinal direction of each of the upper arm and the lower arm.

14. The vehicle according to any one of claims 1 to 13, wherein:
the vehicle comprises an inner wheel and an outer wheel as the steered wheel;
a maximum value of a steering angle of the inner wheel is 50 degrees or more; and
a maximum value of a steering angle of the outer wheel is 35 degrees or more.

15. The vehicle according to claim 14, wherein:
the maximum value of the steering angle of the inner wheel is 50 degrees or more and 80 degrees or less; and
the maximum value of the steering angle of the outer wheel is 35 degrees or more and 80 degrees or less.

16. The vehicle according to any one of claims 1 to 15, wherein a minimum turning radius of the vehicle is 2.5 times or less of a tread width of steered wheels.

17. The vehicle according to any one of claims 1 to 16, wherein a minimum turning radius of the vehicle is 1400 mm or less.

18. The vehicle according to any one of claims 1 to 17, wherein an outer diameter of the steered wheel is 0.26 times or more of a total length of the vehicle.

19. The vehicle according to claim 18, wherein an outer diameter of the steered wheel is 0.26 times or more and 0.4 times or less of an overall length of the vehicle.

20. The vehicle according to any one of claims 1 to 19, wherein an outer diameter of the steered wheel is 0.43 times or more of a wheelbase of the vehicle.

21. The vehicle according to any one of claims 1 to 20, wherein an outer diameter of the steered wheel is 0.43 times or more and 0.67 times or less of a wheelbase of the vehicle.

22. The vehicle according to any one of claims 1 to 21, wherein:
the vehicle is a handle-type electric wheelchair, the vehicle further comprising:
a handle that is steered by a passenger; and
a seat on which the passenger is seated.
